(19) **Europäisches Patentamt / European Patent Office / Office européen des brevets**

(11) **EP 2 662 743 B1**

(12) **FASCICULE DE BREVET EUROPEEN**

(45) Date de publication et mention
de la délivrance du brevet:
**06.04.2016   Bulletin 2016/14**

(51) Int Cl.:
*G05D 1/06* ^(2006.01)     *G08G 5/02* ^(2006.01)

(21) Numéro de dépôt: **13165026.9**

(22) Date de dépôt: **24.04.2013**

(54) **Procédé et dispositif d'aide à la gestion du vol d'un aéronef lors d'une phase d'atterrissage**

Verfahren und Vorrichtung zur Unterstützung der Flugsteuerung eines Luftfahrzeugs während einer Landephase

Method and device for assisted flight management of an aircraft during a landing phase

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **09.05.2012   FR 1254201**

(43) Date de publication de la demande:
**13.11.2013   Bulletin 2013/46**

(73) Titulaire: **AIRBUS OPERATIONS (SAS)
31060 Toulouse (FR)**

(72) Inventeurs:
• **Dumoulin, Anne
  31100 Toulouse (FR)**
• **Locheron, Marc
  31100 Toulouse (FR)**

(74) Mandataire: **Gevers & Orès
41 avenue de Friedland
75008 Paris (FR)**

(56) Documents cités:
**FR-A1- 2 852 684        FR-A1- 2 896 071
US-A1- 2004 044 446**

Printed by Jouve, 75001 PARIS (FR)

## Description

La présente invention concerne un procédé et un dispositif d'aide à la gestion du vol d'un aéronef, en particulier d'un avion de transport, lors d'une phase d'atterrissage sur un aéroport.

Dans le cadre de la présente invention, la phase d'atterrissage comprend la phase d'approche et le toucher des roues de l'aéronef sur la piste.

On sait que, de façon usuelle, selon une procédure standard, pour atterrir, un aéronef passe d'une altitude de début de descente à une altitude prédéterminée (généralement de l'ordre de 3000 pieds) en conservant une vitesse sensiblement constante. Lorsqu'il arrive à cette altitude prédéterminée, l'aéronef décélère jusqu'à une vitesse intermédiaire. L'aéronef intercepte alors un axe d'alignement de descente correspondant à l'aéroport et à la piste d'atterrissage utilisée. La pente standard lors de l'approche finale est fixée à -3°. Au cours de cette phase, l'aéronef continue de décélérer tout en sortant les becs, les volets et les trains pour passer en configuration d'atterrissage. A environ 1000 pieds du sol, l'aéronef maintient une approche stabilisée à une vitesse d'approche considérée (qui est fonction de la configuration de l'aéronef et des conditions météorologiques) jusqu'à 50 pieds au dessus du seuil de la piste, puis il initialise un arrondi pour rejoindre la piste et terminer son atterrissage.

On sait que l'un des nombreux objectifs des acteurs aéronautiques (avionneurs, aéroport, compagnies aériennes) est de réduire les impacts environnementaux (bruit, consommation de fuel) aux alentours des aéroports.

L'approche finale est, généralement, localisée sur un axe défini par des faisceaux (de type « localizer » et « glide path ») d'un système d'atterrissage aux instruments, de type ILS (« Instrument Landing System » en anglais), qui impose la localisation d'un point d'aboutissement, c'est-à-dire un point où l'axe de descente rejoint la piste.

De nouvelles technologies de navigation permettent désormais d'effectuer des approches guidées par satellites. Les approches pour lesquelles seul le guidage latéral est assuré sont qualifiées d'approche de non-précision, par exemple lorsque sont utilisés uniquement des systèmes de type GPS (« Global Positioning System » en anglais). Par opposition, les approches de précision désignent les cas où l'aéronef est en outre guidé dans le plan vertical, en ayant recours à des systèmes tels que le système GLS (« GBAS Landing System » où GBAS signifie « Ground-Based Augmentation System » en anglais). Dans le cas d'approches de non-précision, ou de précision non-contraintes par des moyens de guidage au sol comme l'ILS ou le MLS, le pilote peut être libre de positionner son plan d'approche. Néanmoins, il choisit pratiquement toujours de prendre, par sécurité et par manque de connaissance de la distance de freinage minimale requise pour les conditions effectives (conditions au moment de l'atterrissage), le seuil de piste comme point de référence, à partir duquel est déduit le point d'aboutissement.

Pour la plupart des approches de non-précision, l'approche finale est définie dans la base de données de navigation de manière à ce que l'aéronef arrive à une hauteur prédéterminée (50 pieds) au-dessus du seuil de la piste. Ce choix se cale sur l'approche de précision de type ILS, entre autres, pour les raisons suivantes :

- à chaque atterrissage, un calcul de performance est effectué pour déterminer si la piste disponible est suffisante ou non. Une approche unique pré-codée permet de simplifier la tâche des pilotes ;
- des signaux visuels (feux VASI/PAPI) sont placés au seuil de la piste - et requis pour certaines compagnies - de manière à guider le pilote sur sa trajectoire finale ; et
- atterrir sur une piste plus courte requiert davantage de poussée « inversée ». En l'absence d'obligations particulières, une compagnie aérienne n'a pas particulièrement de raison d'user prématurément les moteurs de ses avions.

Pourtant, lors d'une approche à vue, notamment avec des turbopropulseurs, il peut arriver que le pilote demande l'autorisation de se poser plus en aval sur la piste, dans le cas par exemple où le terminal se trouve à l'autre bout de la piste. Dans ce cas, le pilote doit réaliser des calculs de performance lors de l'atterrissage pour choisir le nouveau point d'aboutissement, qui doit être tel que l'atterrissage puisse être réalisé en toute sécurité, ce qui augmente notamment la charge de travail du pilote et laisse subsister un risque d'erreur.

Par ailleurs, on connaît par le document FR2 896 071 un procédé et un dispositif d'aide au pilotage d'un aéronef lors d'une approche autonome.

La présente invention a pour objet de remédier aux inconvénients précités. Elle concerne un procédé d'aide à la gestion du vol d'un aéronef lors d'une phase d'atterrissage sur un aéroport, procédé selon lequel l'aéronef vole selon un axe d'approche finale qui rejoint la piste d'atterrissage utilisée à un point d'aboutissement, procédé qui permet de diminuer la charge de travail de l'équipage de l'aéronef et d'apporter une automatisation permettant d'agir favorablement sur la sécurité de l'aéronef.

A cet effet, selon l'invention, ledit procédé est remarquable en ce que :

a) on reçoit des informations relatives à des conditions effectives concernant l'environnement (météo,...) et la piste d'atterrissage (état,...) ;
b) à l'aide de ces informations et de caractéristiques de la piste (pente,...), on détermine un décalage maximal qui correspond au décalage longitudinal maximal par rapport au seuil de piste, le long de la piste, du point de passage de l'aéronef à une hauteur prédéterminée par rapport à la piste ;

c) à l'aide d'informations relatives à des conditions effectives concernant l'environnement et la piste d'atterrissage, de critères prédéterminés et dudit décalage maximal, on détermine un décalage effectif qui est inférieur audit décalage maximal, ainsi qu'un point de décalage qui décalé du seuil de la piste le long de cette dernière vers l'aval de la longueur dudit décalage effectif;

d) à partir dudit point de décalage, on calcule un point d'aboutissement dit adapté ; et

e) on transmet ce point d'aboutissement adapté à des moyens d'aide à l'atterrissage de l'aéronef.

Ainsi, grâce à l'invention, on détermine automatiquement un point d'aboutissement (décalé) dit adapté, de type « A-RAP » (pour « Adaptive Runway Aiming Point » en anglais), qui est donc décalé le long de la piste vers l'aval et qui peut être utilisé par différents moyens usuels d'aide à l'atterrissage, comme précisé ci-dessous. Ce calcul automatique permet de réduire la charge de travail du pilote. De plus, grâce à l'invention, comme précisé davantage ci-dessous, on réalise un calcul précis du point d'aboutissement, qui est en outre adapté aux conditions effectives rencontrées au moment de l'atterrissage, aussi bien concernant l'environnement extérieur (conditions météorologiques) que la piste d'atterrissage utilisée (état, pente,...).

En outre, avantageusement, lesdits critères prédéterminés prennent en compte une indication d'une compagnie aérienne, relative à un compromis sur les coûts : consommation de fuel, usure des freins et moteurs, et coût du bruit.

En utilisant le point d'aboutissement adapté, l'aéronef suit la même procédure qu'actuellement jusqu'au pallier, mais il intercepte l'alignement de descente plus tard, la trajectoire visant dans ce cas ledit point d'aboutissement adapté (qui est décalé par rapport au seuil de piste). Ceci permet de faire voler l'avion plus haut pour une même distance au seuil de piste, et a donc un impact positif sur le bruit.

Le procédé conforme à l'invention apporte davantage de souplesse dans le choix d'une approche, permettant, selon le cas :

- de réduire les nuisances sonores ;
- de diminuer les coûts de la compagnie associés à des mesures antibruit mis en place par certains aéroports ; et
- d'augmenter la capacité d'une piste dans le cas où la bretelle de sortie est très éloignée du seuil de la piste.

Dans un mode de réalisation préféré, à l'étape b), pour déterminer ledit décalage maximal :

- on calcule une longueur de piste requise représentant la longueur de piste nécessaire pour réaliser l'atterrissage, à partir des conditions effectives concernant l'environnement et la piste d'atterrissage, de caractéristiques de l'approche envisagée et de performances de l'aéronef ; et

- on soustrait cette longueur de piste requise d'une longueur disponible de manière à obtenir ledit décalage maximal.

Avantageusement, ladite longueur disponible correspond à l'une des longueurs suivantes :

- une longueur de piste disponible usuelle, de type LDA (« Landing Distance Available » en anglais) ; et
- dans le cas d'une sortie envisagée au niveau d'une bretelle de sortie, une longueur de piste auxiliaire, qui est définie du seuil de la piste à ladite bretelle de sortie.

Par ailleurs, avantageusement, à l'étape c), pour déterminer ledit décalage effectif :

- on calcule un coefficient, qui est inférieur à 1 et qui dépend desdites conditions effectives et desdits critères prédéterminés ; et
- on multiplie ledit décalage maximal par ce coefficient de manière à obtenir ledit décalage effectif.

En outre, de façon avantageuse, on prévient un pilote (de préférence à l'aide d'un affichage) de la prise en compte du point d'aboutissement adapté par des moyens d'aide à l'atterrissage de l'aéronef.

La présente invention concerne également une méthode d'aide à l'approche (de précision ou de non-précision) en vue d'un atterrissage, utilisant des moyens d'aide à l'atterrissage qui prennent en compte un point d'aboutissement sur la piste d'atterrissage de l'aéroport, selon laquelle on met en oeuvre le procédé précité, pour déterminer un point d'aboutissement adapté et le transmettre auxdits moyens d'aide à l'atterrissage. La présente invention peut ainsi être appliquée à différentes méthodes usuelles (FLS, GLS,...) comme précisé ci-dessous.

La présente invention concerne, en outre, un dispositif d'aide à la gestion du vol d'un aéronef lors d'une phase d'atterrissage sur un aéroport.

Selon l'invention, ledit dispositif comporte :

- des moyens pour recevoir des informations relatives à des conditions effectives concernant l'environnement et la piste d'atterrissage ;
- des moyens pour déterminer, à l'aide de ces informations et de caractéristiques de la piste, un décalage maximal qui correspond au décalage longitudinal maximal par rapport au seuil de piste, le long de la piste, du point de passage de l'aéronef à une hauteur prédéterminée par rapport à la piste ;

- des moyens pour déterminer, à l'aide d'informations relatives à des conditions effectives concernant l'environnement et la piste d'atterrissage, de critères prédéterminés et dudit décalage maximal, un décalage effectif qui est inférieur audit décalage maximal, ainsi qu'un point de décalage qui décalé du seuil de la piste le long de cette dernière vers l'aval de la longueur dudit décalage effectif ;
- des moyens pour calculer, à partir dudit point de décalage, un point d'aboutissement dit adapté ; et
- des moyens pour transmettre ce point d'aboutissement adapté à des moyens d'aide à l'atterrissage de l'aéronef.

Dans un mode de réalisation particulier, ledit dispositif comporte, de plus :

- des moyens pour générer au moins lesdites informations relatives à des conditions effectives concernant l'environnement et la piste d'atterrissage ; et/ou
- des moyens pour activer ledit dispositif d'aide à l'approche ; et/ou
- des moyens pour prévenir un pilote de la prise en compte du point d'aboutissement adapté par les moyens d'aide à l'atterrissage ; et/ou
- des moyens, notamment de type tête haute, pour afficher ledit point d'aboutissement adapté dans le poste de pilotage de l'aéronef.

La présente invention peut également concerner :

- un système d'aide à l'approche en vue d'un atterrissage, comprenant des moyens d'aide à l'atterrissage qui prennent en compte un point d'aboutissement sur une piste d'atterrissage d'un aéroport, ledit système comportant un dispositif tel que celui précité, pour déterminer un point d'aboutissement adapté et le transmettre auxdits moyens d'aide à l'atterrissage ; et/ou
- un aéronef, en particulier un avion de transport, qui est pourvu d'un tel système et/ou d'un tel dispositif.

Les figures du dessin annexé feront bien comprendre comment l'invention peut être réalisée. Sur ces figures, des références identiques désignent des éléments semblables.

La figure 1 est le schéma synoptique d'un dispositif conforme à l'invention.

Les figures 2 à 4 sont des représentations schématiques d'un atterrissage d'un avion sur une piste, permettant de mettre en évidence les caractéristiques essentielles de l'invention.

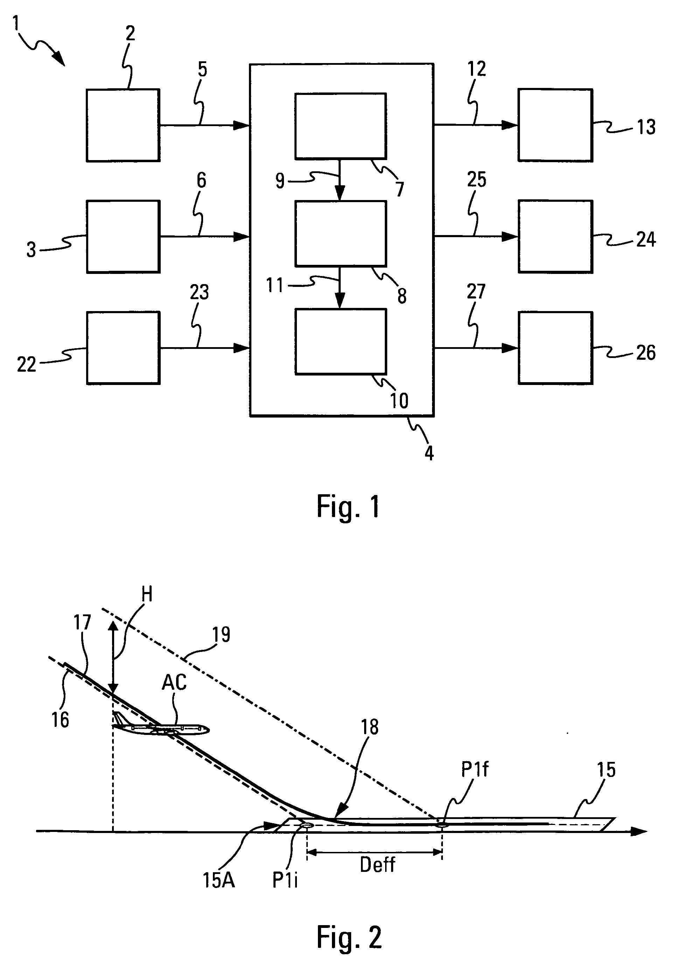

Le dispositif 1 conforme à l'invention et représenté schématiquement sur la figure 1 est destiné à aider à la gestion du vol d'un aéronef AC lors d'une phase d'atterrissage sur un aéroport. Cet aéronef AC peut être en particulier un avion civil ou militaire, de transport de passagers ou de marchandises.

De façon usuelle, lors d'une phase d'atterrissage sur une piste d'atterrissage 15 d'un aéroport, l'aéronef AC vole selon un axe d'approche finale 16 (représenté en traits interrompus sur la figure 2) qui présente une pente prédéterminée, généralement 3°, et qui rejoint la piste d'atterrissage 15 utilisée à un point d'aboutissement (ou point d'ancrage) P1i i (situé en aval du seuil 15A de la piste 15). La trajectoire 17 effectivement suivie par l'aéronef AC dans ce cas se superpose à cet axe 16 jusqu'à proximité de la piste, avec un passage au-dessus du seuil 15A à une hauteur prédéterminée (à un point P0i), généralement 50 pieds, puis présente un arrondi 18 avant le contact avec la piste 15.

Selon l'invention, ledit dispositif 1 qui est embarqué sur l'aéronef AC, comporte :

- des moyens 2, par exemple un clavier et/ou une souris associés à un écran, qui permettent à un membre d'équipage de l'aéronef AC (ou à des moyens automatiques) d'entrer des données et notamment des critères précisés ci-dessous dans le dispositif 1;
- un ensemble 3 de moyens usuels pour générer des informations relatives à des conditions effectives concernant l'environnement (météo,...) et la piste d'atterrissage (état,...), au moment de l'atterrissage, comme précisé ci-après ;
- une unité de traitement 4 qui est reliée par l'intermédiaire de liaisons 5 et 6 respectivement auxdits moyens 2 et audit ensemble 3, et qui comporte :

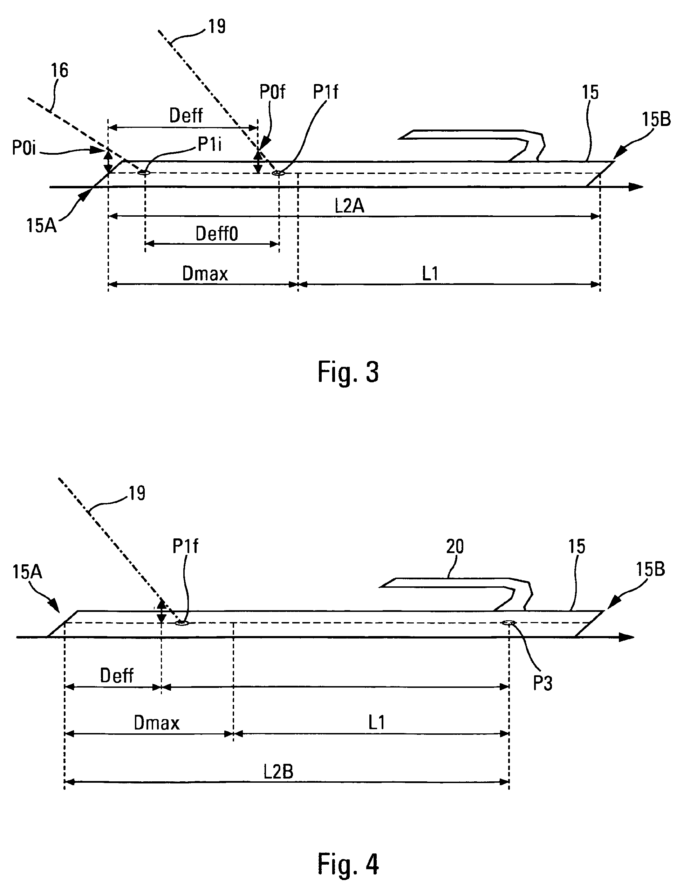

  • des moyens 7 qui sont formés de manière à déterminer, à l'aide de ces informations (relatives à des conditions effectives concernant l'environnement et la piste d'atterrissage 15) et de caractéristiques de la piste 15, un décalage maximal Dmax qui correspond au décalage longitudinal maximal par rapport au seuil de piste 15A, le long de la piste 15, du point P0i (de passage de l'aéronef AC à une hauteur prédéterminée (généralement 50 pieds) par rapport à la piste 15) ;
  • des moyens 8 qui sont reliés par l'intermédiaire d'une liaison 9 auxdits moyens 7 et qui sont formés de manière à déterminer, à l'aide d'informations relatives à des conditions effectives concernant l'environnement et la piste d'atterrissage 15, de critères prédéterminés et dudit décalage maximal Dmax, un décalage effectif Deff qui est inférieur audit décalage maximal Dmax, ainsi qu'un point de décalage P0f (figure 3) qui décalé du point P0i le long de la piste vers l'aval de la longueur dudit décalage effectif Deff ; et
  • des moyens 10 qui sont reliés par l'intermédiaire d'une liaison 11 auxdits moyens 8 et qui sont formés de manière à calculer, à partir dudit point de décalage P0f, un point d'aboutissement P1f dit adapté ; et

- des moyens (par exemple une liaison 12) pour transmettre ce point d'aboutissement adapté P1f à des moyens 13 d'aide à l'atterrissage de l'aéronef.

Ainsi, le dispositif 1 conforme à l'invention détermine automatiquement un point d'aboutissement P1f (décalé) dit adapté, de type « A-RAP » (pour « Adaptive Runway Aiming Point » en anglais), qui est donc décalé le long de la piste 15 vers l'aval et qui peut être utilisé par différents moyens usuels d'aide à l'atterrissage, comme précisé ci-dessous. Ce calcul automatique permet de réduire la charge de travail du pilote. De plus, le dispositif 1 réalise un calcul précis du point d'aboutissement P1f, qui est en outre adapté aux conditions effectives rencontrées au moment de l'atterrissage, aussi bien concernant l'environnement extérieur (conditions météorologiques) que la piste d'atterrissage 15 utilisée (état (sec, mouillé,...), pente,...).

En utilisant le point d'aboutissement adapté P1 f, l'aéronef AC suit la même procédure qu'actuellement jusqu'au pallier, mais il intercepte l'alignement de descente plus tard. Comme représenté sur la figure 2, la trajectoire nouvelle 19 (représentée en traits mixtes) vise dans ce cas ledit point d'aboutissement adapté P1f (qui est décalé par rapport au point d'aboutissement habituel P1 i). Ceci permet de faire voler l'avion AC plus haut (hauteur H entre les axes 16 et 19) pour une même distance au seuil de piste, et a donc un impact positif sur le bruit.

Le dispositif 1 conforme à l'invention apporte ainsi davantage de souplesse dans le choix d'une approche, permettant, selon le cas :

- de réduire les nuisances sonores ;
- de diminuer les coûts de la compagnie associés à des mesures antibruit mis en place par certains aéroports ; et
- d'augmenter la capacité d'une piste dans le cas où la bretelle de sortie est très éloignée du seuil de la piste, comme précisé ci-dessous.

Dans un mode de réalisation préféré, pour déterminer ledit décalage maximal Dmax, lesdits moyens 7 comprennent des éléments intégrés pour, respectivement :

- calculer, de façon usuelle, une longueur de piste requise L1, de type RLD (« Required Landing Distance» en anglais). Cette longueur de piste requise L1 représente la longueur de piste nécessaire pour réaliser l'atterrissage, à partir des conditions effectives concernant l'environnement et la piste d'atterrissage 15, des caractéristiques de l'approche envisagée et de performances de l'aéronef AC. La longueur de piste requise L1 est donc liée à l'approche alternative envisagée, et non pas à l'approche conventionnelle.

En effet, le pilote qui souhaite faire une approche plus pentue sur un point d'aboutissement décalé peut souhaiter en profiter pour adopter une approche finale avec une pente différente, notamment augmentée (par exemple 4° au lieu de 3°). De ce fait, la distance de piste requise n'est pas celle qu'il aurait eue avec une approche conventionnelle ; et

- soustraire cette longueur de piste requise L1 d'une longueur disponible L2A, L2B de manière à obtenir ledit décalage maximal Dmax.

Ladite longueur disponible correspond :

- soit à une longueur de piste disponible L2A, de type LDA (« Landing Distance Available » en anglais), qui est définie entre le seuil 15A de la piste et l'extrémité 15B en aval, comme représenté sur la figure 3, dans une situation standard ;
- soit, dans le cas d'une sortie envisagée au niveau d'une bretelle de sortie 20 (située donc en amont de l'extrémité 15B), à une longueur de piste auxiliaire L2B, qui est définie du seuil 15A de la piste à la position P3 de ladite bretelle de sortie 20, comme représenté sur la figure 4.

Par conséquent, Dmax vérifie l'une des relations suivantes (selon la sortie envisagée) :

- Dmax = L2A - L1 ; ou
- Dmax= L2B - L1.

Par ailleurs, dans un mode de réalisation préféré, pour déterminer ledit décalage maximal Deff, lesdits moyens 8 comprennent des éléments intégrés pour, respectivement :

- calculer un coefficient C, qui est inférieur ou égal à 1 (pour que Deff reste inférieur ou égal à Dmax) et qui dépend desdites conditions effectives et desdits critères prédéterminés ; et
- pour multiplier ledit décalage maximal Dmax par ce coefficient C de manière à obtenir ledit décalage effectif Deff.

Par conséquent, Deff vérifie la relation suivante :

$$\mathsf{Deff} \;=\; \mathsf{C} \,.\, \mathsf{Dmax}$$

De préférence, lesdits critères prédéterminés prennent en compte une indication d'une compagnie aérienne, relative à un compromis sur les coûts : consommation de fuel, usure des freins et moteurs, et coût du bruit.

Ledit critère C dépend ainsi :

- de données météo du jour ;
- de caractéristiques de la piste 15 (état,...) ; et
- de la politique de la compagnie (concernant notamment un compromis sur les coûts).

Le point de décalage P0f (figure 3) déterminé par les moyens 8 est donc le nouveau point où passe la nouvelle trajectoire 19 à 50 pieds du sol. En fonction de ce point P0f et de la pente envisagée de la nouvelle trajectoire linéaire 19, il est aisé pour les moyens 10 de déterminer le point d'aboutissement adapté P1f (qui est le point d'ancrage de cette trajectoire 19). Bien entendu, si les pentes des approches envisagées pour les axes 16 et 19 sont les mêmes, la distance Deff0 entre P1i et P1f est égale à ladite distance Deff (entre P0i et P0f).

Dans un mode de réalisation particulier, le dispositif 1 comporte également des moyens 22 qui sont reliés par l'intermédiaire d'une liaison 23 à l'unité de traitement 4 et qui sont formés de manière à activer ledit dispositif 1.

Pour activer le dispositif 1, plusieurs solutions sont concevables :

- choix du pilote via une unité de contrôle de type MCDU (« Multipurpose Control and Display Unit » en anglais) ;
- choix imposé par la politique de la compagnie (transparent pour les pilotes) ; ou
- choix d'un système de type FMS.

En outre, dans un mode de réalisation particulier, ledit dispositif 1 comporte également des moyens 24 qui sont reliés par l'intermédiaire d'une liaison 25 à l'unité de traitement 4 et qui sont destinés à prévenir un pilote (notamment par un affichage) de la prise en compte du point d'aboutissement adapté P1f par les moyens 13 d'aide à l'atterrissage. Il est en effet nécessaire d'indiquer au pilote qu'il réalise une approche de type A-RAP, puisque dans ce cas, l'aéronef AC sera amené à intercepter l'axe d'approche finale 19 plus tardivement que pour l'approche publiée (axe 16).

Dans un mode de réalisation particulier, ledit dispositif 1 peut également comporter des moyens d'affichage 26 (qui sont reliés par l'intermédiaire d'une liaison 27 à l'unité de traitement 4), pour afficher ledit point d'aboutissement adapté P1f dans le poste de pilotage de l'aéronef AC.

De préférence, ces moyens d'affichage 26 sont de type tête haute de manière à afficher le point d'aboutissement P1f en superposition de l'environnement extérieur vu par le pilote à l'avant de l'aéronef AC, ce qui permet d'indiquer la position exacte de ce point sur la piste.

Ainsi, grâce au dispositif 1 conforme à l'invention, le point d'aboutissement P1f est positionné automatiquement en fonction notamment :

- de paramètres usuels qui sont utilisés dans un calcul

- de performance à l'atterrissage ;
- de la bretelle de sortie 20 ; et
- d'un indicateur reflétant la stratégie de la compagnie. Par exemple, une compagnie préférera préserver les freins et moteurs au détriment du bruit à l'approche, tandis qu'une autre souhaitera à tout prix minimiser le bruit en approche finale.

Le dispositif 1 conforme à l'invention peut être appliqué à différents systèmes embarqués d'aide à la gestion de l'approche, comprenant des moyens 13 d'aide à l'atterrissage qui prennent en compte un point d'aboutissement sur une piste d'atterrissage 15 d'un aéroport.

On peut, en particulier, appliquer l'invention à des systèmes usuels d'approche dite de non-précision (approche FLS par exemple) ou basée sur des technologies de guidage par satellites ou GPS (GLS, SLS,...) ou de type F-APP (BARO-V-Nav).

Ainsi :

- dans le cas d'une fonction F-APP (BARO-V-Nav), le point d'aboutissement optimisé est calculé par un système, tel qu'un système FMS par exemple, dans lequel sera intégré le dispositif 1, pour prédire la nouvelle trajectoire d'approche en prenant en compte ce décalage ; et
- dans le cas d'une fonction GLS/SLS avec GEO-V-Nav, un certain nombre d'axes d'approche sont prédéfinis et stockés dans une base de données. En fonction des conditions du jour, le point d'aboutissement optimisé, calculé par le dispositif 1, permet au système FMS et/ou à un système FCGS de retenir l'axe le plus pertinent.

Par ailleurs, dans une application préférée, le dispositif 1 conforme à l'invention est associé un système d'aide à la gestion de l'approche d'un aéronef, qui met en oeuvre une fonction de type FLS (pour « FMS Landing System » en anglais).

Dans une approche FLS, la trajectoire finale est définie à bord de l'aéronef par un système de gestion de vol, de type FMS (« Flight Management System » en anglais), à partir de données prédéfinies dans une base de données de navigation ou entrées par le pilote durant la préparation de la phase d'approche. Il est donc possible de venir modifier certains paramètres, comme le point d'aboutissement.

La fonction FLS propose une construction verticale d'un axe d'approche fixe, à partir des informations publiées sur les cartes en assurant une correction de la baro-altitude en température froide, pour permettre à l'avion de voler comme en conditions standards. Le système FMS définit ce segment final à partir des paramètres suivants : pente, direction et point d'ancrage (ou point d'aboutissement). Un tel mode d'approche de non précision du type FLS est décrit, par exemple, dans les brevets FR-2 852 683, FR-2 852 684 et FR-2 852 686.

Grâce à l'invention, on calcule un nouveau point d'ancrage optimisé (point d'aboutissement adapté P1f) à l'aide du dispositif 1 qui est intégré dans un système annexe ou dans le système FMS. Ce point d'ancrage est, de ce fait, décalé, tandis que les autres caractéristiques de la fonction FLS (route et pente) sont conservées.

Ainsi, à une même distance de la piste, l'aéronef AC vole au-dessus de la trajectoire publiée 16 (légalement autorisée), et les marges d'évitement d'obstacle sont ainsi géométriquement maintenues.

Il est possible de conserver la fonction FLS telle quelle, avec un point d'aboutissement (ou d'ancrage) adapté, limitée par des bornes d'utilisation prédéfinies. La fonction FLS peut également continuer à proposer le point d'aboutissement de référence si le bénéfice global (environnement, capacité,...) n'est pas avantageux.

Le point d'aboutissement adapté est calculé par le dispositif 1 qui peut être intégré :

- dans le système FMS ;
- dans un calculateur de guidage et de contrôle, de type FCGS (« Flight Control and Guidance System » en anglais) ou ;
- dans un autre système embarqué.

La fonction A-RAP, mise en oeuvre par le dispositif 1, peut se présenter sous forme d'option pour les pilotes, ou être de base et implémentée pour traduire une politique de la compagnie aérienne.

## Revendications

1. Procédé d'aide à la gestion du vol d'un aéronef lors d'une phase d'atterrissage sur un aéroport, procédé selon lequel l'aéronef (AC) vole selon un axe d'approche finale qui rejoint la piste d'atterrissage (15) utilisée à un point d'aboutissement, **caractérisé en ce que**, de façon automatique :

    a) on reçoit des informations relatives à des conditions effectives concernant l'environnement et la piste d'atterrissage (15) ;
    b) à l'aide de ces informations et de caractéristiques de la piste (15), on détermine un décalage maximal (Dmax) qui correspond au décalage longitudinal maximal par rapport au seuil de piste (15A), le long de la piste, du point de passage de l'aéronef (AC) à une hauteur prédéterminée par rapport à la piste (15) ;
    c) à l'aide de conditions effectives concernant l'environnement et la piste d'atterrissage (15), de critères prédéterminés et dudit décalage maximal, on détermine un décalage effectif (Deff) qui est inférieur audit décalage maximal (Dmax), ainsi qu'un point de décalage (P0f) qui décalé du seuil (15A) de la piste (15) le long de cette dernière vers l'aval de la longueur dudit décalage effectif (Deff) ;

    d) à partir dudit point de décalage (P0f), on calcule un point d'aboutissement dit adapté (P1 f) ; et
    e) on transmet ce point d'aboutissement adapté (P1f) à des moyens (13) d'aide à l'atterrissage de l'aéronef.

2. Procédé selon la revendication 1, **caractérisé en ce qu'**à l'étape b), pour déterminer ledit décalage maximal (Dmax) :

    - on calcule une longueur de piste requise (L1) représentant la longueur de piste nécessaire pour réaliser l'atterrissage, à partir des conditions effectives concernant l'environnement et la piste d'atterrissage (15), de caractéristiques de l'approche envisagée et de performances de l'aéronef (AC) ; et
    - on soustrait cette longueur de piste requise (L1) d'une longueur disponible (L2A, L2B) de manière à obtenir ledit décalage maximal (Dmax).

3. Procédé selon la revendication 2, **caractérisé en ce que** ladite longueur disponible correspond à l'une des longueurs suivantes :

    - une longueur de piste disponible (L2A) ; et
    - dans le cas d'une sortie envisagée au niveau d'une bretelle de sortie (20), une longueur de piste auxiliaire (L2B), qui est définie du seuil de la piste à ladite bretelle de sortie.

4. Procédé selon l'une quelconque des revendications précédentes, **caractérisé en ce que** l'on prévient le cas échéant un pilote de la prise en compte du point d'aboutissement adapté (P1f) par des moyens (13) d'aide à l'atterrissage de l'aéronef.

5. Méthode d'aide à la gestion de l'approche d'un aéronef en vue d'un atterrissage, utilisant des moyens d'aide à l'atterrissage qui prennent en compte un point d'aboutissement sur une piste d'atterrissage d'un aéroport, **caractérisé en ce que** l'on met en oeuvre le procédé spécifié sous l'une quelconque des revendications 1 à 4, pour déterminer un point d'aboutissement adapté (P1f) et le transmettre auxdits moyens (13) d'aide à l'atterrissage.

6. Dispositif d'aide à la gestion du vol d'un aéronef lors d'une phase d'atterrissage sur un aéroport, ledit aéronef (AC) étant susceptible de voler selon un axe d'approche finale qui rejoint la piste d'atterrissage (15) utilisée à un point d'aboutissement, **caractérisé en ce qu'**il comporte :

- des moyens (6) pour recevoir des informations relatives à des conditions effectives concernant l'environnement et la piste d'atterrissage (15) ;
- des moyens (7) pour déterminer, à l'aide de ces informations et de caractéristiques de la piste (15), un décalage maximal (Dmax) qui correspond au décalage longitudinal maximal par rapport au seuil de piste (15A), le long de la piste, du point de passage de l'aéronef (AC) à une hauteur prédéterminée par rapport à la piste (15) ;
- des moyens (8) pour déterminer, à l'aide de conditions effectives concernant l'environnement et la piste d'atterrissage (15), de critères prédéterminés et dudit décalage maximal (Dmax), un décalage effectif (Deff) qui est inférieur audit décalage maximal (Dmax), ainsi qu'un point de décalage (P0f) qui décalé du seuil (15A) de la piste (15) le long de cette dernière vers l'aval de la longueur dudit décalage effectif (Deff) ;
- des moyens (10) pour calculer, à partir dudit point de décalage (P0f), un point d'aboutissement dit adapté (P1 f) ; et
- des moyens (12) pour transmettre ce point d'aboutissement adapté (P1f) à des moyens (13) d'aide à l'atterrissage de l'aéronef (AC).

7. Dispositif selon la revendication 6,
   **caractérisé en ce qu'**il comporte, de plus, des moyens (3) pour générer au moins lesdites informations relatives à des conditions effectives concernant l'environnement et la piste d'atterrissage (15).

8. Dispositif selon l'une des revendications 6 et 7,
   **caractérisé en ce qu'**il comporte, de plus, des moyens (22) pour activer ledit dispositif (1).

9. Dispositif selon l'une des revendications 6 à 8,
   **caractérisé en ce qu'**il comporte, de plus, des moyens (24) pour prévenir un pilote de la prise en compte du point d'aboutissement adapté (P1 f) par les moyens (13) d'aide à l'atterrissage.

10. Dispositif selon l'une des revendications 6 à 9,
    **caractérisé en ce qu'**il comporte, de plus, des moyens (26) pour afficher ledit point d'aboutissement adapté (P1 f) dans le poste de pilotage de l'aéronef (AC).

11. Système d'aide à la gestion de l'approche d'un aéronef en vue d'un atterrissage, ledit système comprenant des moyens (13) d'aide à l'atterrissage qui prennent en compte un point d'aboutissement sur une piste d'atterrissage d'un aéroport,
    **caractérisé en ce qu'**il comporte, de plus, le dispositif (1) spécifié sous l'une quelconque des revendications 6 à 10, pour déterminer un point d'aboutissement adapté (P1f) et le transmettre auxdits moyens (13) d'aide à l'atterrissage.

12. Aéronef,
    **caractérisé en ce qu'**il comporte, de plus, le dispositif (1) spécifié sous l'une quelconque des revendications 6 à 10.

## Patentansprüche

1. Verfahren zur Steuerungshilfe eines Flugzeugs während eines Landeanfluges an einem Flughafen, wonach das Flugzeug (AC) einer Endanfluglinie, die in die an einem Zielpunkt verwendete Landebahn (15) übergeht, folgt,
   **dadurch gekennzeichnet, dass**:

   a) Informationen über die effektiven Bedingungen der Umgebung und der Landebahn (15) automatisch empfangen werden;
   b) mithilfe dieser Informationen und Merkmalen der Landebahn (15) automatisch eine maximale Verschiebung (Dmax) bestimmt werden kann, die der maximalen Längsverschiebung im Verhältnis zur Landebahnschwelle (15A) entlang der Bahn, vom Überfliegungspunkt des Flugzeugs (AC) in einer im Verhältnis zur Bahn (15) vorgegebenen Höhe entspricht;
   c) mithilfe effektiver Bedingungen der Umgebung und der Landebahn (15), vorgegebener Kriterien und besagter maximaler Verschiebung automatisch eine effektive Verschiebung (Deff, die unter besagter maximaler Verschiebung (Dmax) liegt, sowie ein Verschiebungspunkt (P0f), der im Verhältnis zur Schwelle (15A) der Bahn (15) entlang letzterer Bahn abwärts der Länge der besagten effektiven Verschiebung (Eff) verschoben ist, bestimmt werden können;
   d) ab besagtem Verschiebungspunkt (P0f) automatisch ein so genannter angemessener Zielpunkt (P1f) bestimmt werden kann;
   und
   e) dieser angemessene Zielpunkt (P1f) automatisch an Landehilfen (13) des Flugzeugs übertragen werden kann.

2. Verfahren nach Anspruch 1,
   **dadurch gekennzeichnet, dass** im Schritt b) zur Bestimmung besagter maximaler Verschiebung (Dmax):

   - mithilfe der effektiven Bedingungen der Umgebung und der Landebahn (15), Merkmalen des beabsichtigten Anflugs und der Leistung des Flugzeugs (AC) eine für die Landung erforderliche Bahnlänge (L1) berechnet wird; und
   - diese erforderliche Bahnlänge (L1) von einer verfügbaren Länge (L2A, L2B) abgezogen wird, um besagte maximale Verschiebung (Dmax) zu erzielen.

3. Verfahren nach Anspruch 2,
**dadurch gekennzeichnet, dass** besagte verfügbare Länge einer der folgenden Längen entspricht:

- einer verfügbaren Bahnlänge (L2A); und
- im Fall eines geplanten Verlassens über eine Ausfahrt (20) einer Hilfsbahnlänge (L2B), die von der Bahnschwelle bis zur besagten Ausfahrt bestimmt wird.

4. Verfahren nach einem der vorherigen Ansprüche,
**dadurch gekennzeichnet, dass** ein Pilot gegebenenfalls mithilfe der Landehilfen (13) des Flugzeugs über die Berücksichtigung eines angemessenen Zielpunkts (P1f) benachrichtigt wird.

5. Methode zur Steuerungshilfe eines Flugzeugs während eines Landeanfluges unter Verwendung der Landehilfen, die einen Zielpunkt auf einer Landebahn eines Flughafens berücksichtigen, **dadurch gekennzeichnet, dass** das in einem der Ansprüche 1 bis 4 spezifizierten Verfahren verwendet wird, um einen angemessenen Zielpunkt (P1f) zu bestimmen und ihn an besagte Landehilfen (13) zu übermitteln.

6. Vorrichtung zur Steuerungshilfe eines Flugzeugs während eines Landeanfluges an einem Flughafen, wobei besagtes Flugzeug (AC) einer Endanfluglinie, die in die an einem Zielpunkt verwendete Landebahn (15) übergeht, folgen soll,
**dadurch gekennzeichnet, dass** sie:

- Mittel (6) zum Empfang der Informationen über die effektiven Bedingungen der Umgebung und der Landebahn (15);
- Mittel (7) zur Bestimmung einer maximalen Verschiebung (Dmax), die der maximalen Längsverschiebung im Verhältnis zur Landebahnschwelle (15A) entlang der Bahn, vom Überfliegungspunkt des Flugzeugs (AC) in einer im Verhältnis zur Bahn (15) vorgegebenen Höhe entspricht, mithilfe dieser Informationen und Merkmale der Bahn (15);
- Mittel (8) zur Bestimmung vorgegebener Kriterien und besagter maximaler Verschiebung (Dmax), einer effektiven Verschiebung (Deff), die unter besagter maximaler Verschiebung (Dmax) liegt, sowie eines Verschiebungspunktes (P0f), der im Verhältnis zur Schwelle (15A) der Bahn (15) entlang letzterer Bahn abwärts der Länge der besagten effektiven Verschiebung (Deff) mithilfe effektiver Bedingungen der Umgebung und der Landebahn (15) verschoben ist;

- Mittel (10) zur Berechnung eines so genannten Endpunktes (P1f) mithilfe des besagten Verschiebungspunktes (P0f); und
- Mittel (12) zur Übertragung dieses angepassten Endpunktes (P1f) an Landehilfen (13) des Flugzeugs (AC) umfasst.

7. Vorrichtung nach Anspruch 6,
**dadurch gekennzeichnet, dass** sie außerdem Mittel (3) zur Erzeugung mindestens besagter Informationen über effektive Merkmale der Umgebung und der Landebahn (15) umfasst.

8. Vorrichtung nach einem der Ansprüche 6 und 7,
**dadurch gekennzeichnet, dass** sie außerdem Mittel (22) zur Aktivierung besagter Vorrichtung (1) umfasst.

9. Vorrichtung nach einem der Ansprüche 6 bis 8,
**dadurch gekennzeichnet, dass** sie außerdem Mittel (24) zur Benachrichtigung eines Piloten über die Berücksichtigung des angemessenen Endpunktes (P1f) mithilfe der Landehilfen (13) umfasst.

10. Vorrichtung nach einem der Ansprüche 6 bis 9,
**dadurch gekennzeichnet, dass** sie außerdem Mittel (26) zur Anzeige des besagten angemessenen Endpunktes (P1f) im Cockpit des Flugzeugs (AC) umfasst.

11. System zur Steuerungshilfe eines Flugzeugs während eines Landeanfluges, wobei besagtes System Landehilfen (13), die einen Endpunkt auf einer Landebahn eines Flughafens berücksichtigen, umfasst,
**dadurch gekennzeichnet, dass** es außerdem die in einem der Ansprüche 6 bis 10 spezifizierte Vorrichtung (1) zur Bestimmung eines angemessenen Endpunktes (P1f) und zu seiner Übermittlung an besagte Landehilfen (13) umfasst.

12. Flugzeug,
**dadurch gekennzeichnet, dass** es außerdem die in einem der Ansprüche 6 bis 10 spezifizierte Vorrichtung (1) umfasst.

**Claims**

1. A method for aiding the flight management of an aircraft during a landing on an airport phase, a method according to which the aircraft (AC) flies along a final approach path which joins the runway (15) used at an aiming point,
**characterized in that**, automatically:

a) information relative to actual conditions regarding the environment and the runway (15) is received;

b) using this information and characteristics of the the runway (15), a maximum shift (Dmax) is determined which corresponds to the maximum longitudinal shift along the runway, with respect to the runway threshold (15A), of the point of passage of the aircraft (AC) at a predetermined height with respect to the runway (15);

c) using actual conditions regarding the environment and the runway (15), predetermined criteria and said maximum shift, an actual shift (Deff) is determined which is less than said maximum shift (Dmax), as well as a shift point (P0f) which is shifted from the threshold (15A) of the runway (15) along the latter in the downstream direction by the length of said actual shift (Deff);

d) from said shift point (P0f), a so-called adaptive aiming point (P1f) is calculated; and

e) this adaptive aiming point (P1f) is transmitted to landing aid means (13) of the aircraft.

2. The method as claimed in claim 1, **characterized in that**, in step b), in order to determine said maximum shift (Dmax):

- there is calculated a required runway length (L1), representing the runway length necessary for carrying out the landing, from actual conditions regarding the environment and the runway (15), from characteristics of the envisaged approach and from performance figures of the aircraft (AC); and
- this required runway length (L1) is subtracted from an available length (L2A, L2B) in order to obtain said maximum shift (Dmax).

3. The method as claimed in claim 2, **characterized in that** said available length corresponds to one of the following lengths:

- an available runway length (L2A); and
- in the case of an envisaged exit at an exit taxiway (20), an auxiliary runway length (L2B), which is defined from the threshold of the runway to said exit taxiway.

4. The method as claimed in any one of the preceding claims, **characterized in that**, if necessary, a pilot is informed of the taking into account of the adaptive aiming point (P1f) by the landing aid means (13) of the aircraft.

5. A method aiding the approach of an aircraft for the purpose of a landing, using landing aid means which take into account an aiming point on the runway of an airport, **characterized in that** the method as claimed in any one of claims 1 to 4 is implemented, in order to determine an adaptive aiming point (P1f) and to transmit it to said landing aid means (13).

6. A device aiding the flight management of an aircraft during a phase of landing on an airport, said aircraft (AC) being able to fly along a final approach path which joins the runway (15) used at an aiming point, **characterized in that** it comprises:

- means (6) for receiving information relative to actual conditions regarding the environment and the runway (15);
- means (7) for determining, using this information and characteristics of the runway (15), a maximum shift (Dmax) which corresponds to the maximum longitudinal shift with respect to the runway threshold (15A), along the runway, from the point of passage of the aircraft (AC) at a predetermined height with respect to the runway (15);
- means (8) for determining, using information relative to actual conditions regarding the environment and the runway (15), predetermined criteria and said maximum shift (Dmax), an actual shift (Deff) which is less than said maximum shift (Dmax), as well as a shift point (P0f) which is shifted from the threshold (15A) of the runway (15) along the latter in the downstream direction by the length of said actual shift (Deff);
- means (10) for calculating, from said shift point (P0f), a so-called adaptive aiming point (P1f); and
- means (12) for transmitting this adaptive aiming point (P1f) to landing aid means (13) of the aircraft (AC).

7. The device as claimed in claim 6, **characterized in that** it furthermore comprises means (3) for generating at least said information relative to actual conditions regarding the environment and the runway (15).

8. The device as claimed in one of claims 6 and 7, **characterized in that** it furthermore comprises means (22) for activating said device (1).

9. The device as claimed in one of claims 6 to 8, **characterized in that** it furthermore comprises means (24) of informing a pilot of the taking into account of the adaptive aiming point (P1f) by the landing aid means (13).

10. The device as claimed in one of claims 6 to 9, **characterized in that** it furthermore comprises means (26) for displaying said adaptive aiming point (P1f) in the cockpit of the aircraft (AC).

11. A system aiding the management of the approach of an aircraft for the purpose of a landing, said system comprising landing aid means (13) which take into account an aiming point on a runway of an airport, **characterized in that** it furthermore comprises the device (1) as claimed in any one of claims 6 to 10, for determining an adaptive aiming point (P1f) and transmitting it to said landing aid means (13).

12. An aircraft,
**characterized in that** it furthermore comprises the device (1) as claimed in any one of claims 6 to 10.

Fig. 1

Fig. 2

EP 2 662 743 B1

Fig. 3

Fig. 4

13

**EP 2 662 743 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2896071
- FR 2852683
- FR 2852684
- FR 2852686